# EUROPEAN PATENT APPLICATION

(11) **EP 4 715 222 A1**
(43) Date of publication of application: **25.03.2026**
(21) Application number: 25156055.3
(22) Date of filing: 05.02.2025
(51) Int. Cl.: F16B 5/02, F16B 35/04, H02G 3/12, H02G 3/14, F16B 23/00, F16B 43/00

(54) **A DEVICE FOR FIXING AN ENCLOSURE TO A WALL**

(30) Priority: 18.09.2024 GB 202413755
(71) Applicant: Electrix International Limited, Bishop Auckland, County Durham DL14 6XP (GB)
(72) Inventor: Thompson, Christopher, Bishop Auckland, DL14 6XP (GB)
(74) Representative: Archer, Graham John

(57) **Abstract**

A device for fixing an enclosure to a wall is disclosed and in particular a device for fixing an enclosure at a distance away from the wall is disclosed. The device includes a support member, a first fastener, a spacer and a second fastener. The support member has a first aperture located adjacent a first end and a second aperture located adjacent a second end. The first fastener is used for fixing the first end to the enclosure through the first aperture, wherein when the support member is fixed to the enclosure said second end extends beyond an edge of the enclosure. The spacer includes a third aperture therethrough and is removably attached to the second end of the support member such that the second aperture and the third aperture align. The second fastener is used for fixing the second end to the wall such that the second fastener extends through the second aperture.

## Description

The present invention relates to a device for fixing an enclosure to a wall and relates particularly, but not exclusively, to a device for fixing an enclosure at a distance away from the wall.

When installing a metal enclosure, for switches or wiring, to a wall, various fixing methods can be used. One such method is to use holes formed in the rear panel of the enclosure and fix it to the wall using screws, bolts or the like. While this is a straightforward method, the holes create potential entry points for moisture and dust. In factories such as those used in the food, beverage and pharmaceutical manufacturing industries where hygiene is important, entry points that allow liquids to sit potentially causing bacterial growth are unacceptable.

Alternatively, external brackets can be welded to the enclosure, allowing the enclosure to be screwed into place via these brackets. This method can be useful when the screws to mount the enclosure need to be placed away from the rear of the enclosure. When hygiene and cleaning the enclosure is important a welded bracket can be used to elevate the enclosure away from the wall. However, the welded brackets are very difficult and awkward to clean and create a potential bacteria trap once they are installed.

While these wall fixing methods for a metal enclosure are generally effective, they do not necessarily work in every situation. In certain conditions the surface directly behind the enclosure may not be suitable to be drilled into. This can occur when the preferred fixing centres are in locations that are not within the footprint area of the rear of the enclosure.

Preferred embodiments of the present invention seek to overcome or alleviate the above described disadvantages of the prior art.

According to an aspect of the present invention there is provided a device for fixing an enclosure to a wall, the device comprising:
a support member having a first aperture located adjacent a first end and a second aperture located adjacent a second end;
a first fastener for fixing the first end to the enclosure through the first aperture, wherein when the support member is fixed to the enclosure the second end extends beyond an edge of the enclosure;
a spacer having a third aperture therethrough and removably attached to the second end of the support member such that the second aperture and the third aperture align; and a second fastener for fixing the second end to the wall such that the second fastener extends through the second aperture.

By including a spacer, the device creates a gap between the enclosure and the wall, which enables easier cleaning of the area behind the enclosure. This is especially beneficial in environments where cleanliness is important, as it provides easy access to the wall surface and the rear of the enclosure for cleaning purposes. This further helps prevent the accumulation of dust, water or contaminants and minimises the catchment areas that attracts the buildup of bacteria.

Furthermore, the placement of the spacer allows the second fastener, to be positioned further away from the rear footprint of the enclosure. This feature is advantageous in situations where it is not practical to secure the enclosure directly behind it due to obstructions or wall structure limitations. The ability to secure the enclosure at a distance from the wall enhances the flexibility of installation.

In a preferred embodiment the spacer further comprises a threaded protrusion for engaging the second end of the support member.

In another preferred embodiment the support member further comprises a junction between the first and second apertures wherein the junction engages an edge of the enclosure to prevent rotation of the device once installed.

In a further preferred embodiment the spacer further comprises a seal encircling the third aperture.

The seal protects the entry point of the third aperture and prevents liquids or dust from entering, further decreasing the chance of bacterial growth.

In an additional preferred embodiment the first fastener comprises a head and a tail wherein the head has a diameter greater than the tail and the tail is threaded and the first aperture comprises a first recess for engaging of the head of the first fastener.

By having the first fastener head lying flush with the enclosure simplifies cleaning by eliminating protrusions where dust and debris can accumulate. This smooth surface prevents the formation of dust traps, ensuring that the enclosure remains easier to wipe down and maintain.

In a preferred embodiment the first fastener comprises a tool engaging portion in the tail and more preferably the tool engaging portion comprises an Allen key recess.

In another preferred embodiment the first fastener comprises an Allen key bolt and the second fastener comprises a screw.

Preferred embodiments of the present invention will now be described, by way of example only, and not in any limitative sense with reference to the accompanying drawings in which:-
Figure 1 is a perspective view of the device of the present invention;
Figure 2 is another perspective view of the device of figure 1; and
Figure 3 is a plan view of the device of figure 1 in use.

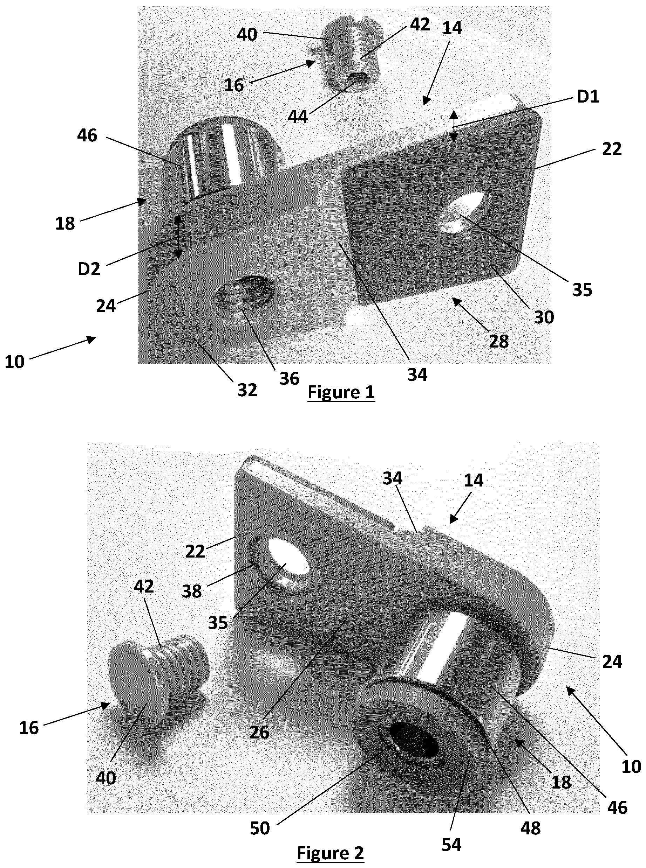

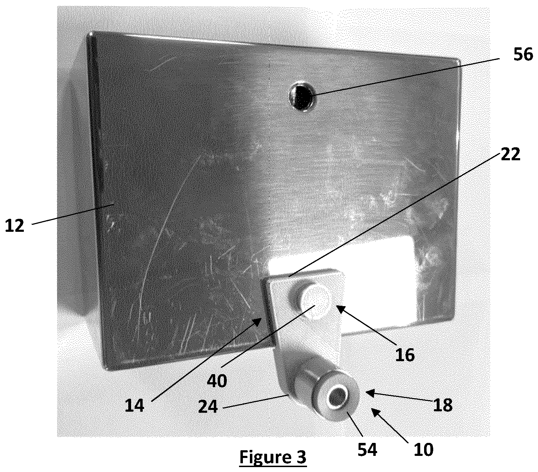

Initially referring to figures 1 and 2, a device 10 for fixing an enclosure 12 (see figure 3) to a surface such as a wall (not shown) includes a support member 14, a first fastener 16, a spacer 18 and a second fastener (not shown).

The support member 14 has a first end 22 having a substantially straight edge that tapers towards a second end 24 having a substantially curved edge. The support member 14 also includes a first surface 26 and a second surface 28. The second surface 28 includes a first surface portion 30 and a second surface portion 32. The first surface portion 30 is located adjacent the first end 22 of the support member 14, while the second surface portion 32 is located adjacent the second end 24. The first end 22 has a depth D1 and the second end 24 has a depth D2, such that the thickness D1 is less than the thickness D2. Located in between the first and second surface portions, 30 and 32 is a junction 34. At the junction 34 is a curved transition area between the first depth D1 and the second depth D2. When the device 10 is fixed to the enclosure 12, the first surface portion 30 of the second surface 28 engages the rear of the enclosure, such that the curved shape of junction 34 abuts the edge. Consequently, the second surface portion 32 of the second surface 28 extends beyond the edge of the enclosure, engaging the wall.

Extending through the first and second surfaces, 26 and 28 are a pair of apertures, 35 and 36. The first aperture 35 is located adjacent the first end 22 whereas the second aperture 36 is located adjacent the second end 24. The first aperture 35 includes a first recess 38 that engages the first fastener 16. The first fastener 16 includes a head 40 and a tail 42, where the diameter of the head is larger than the diameter of the tail. The head 40 of the first fastener 16 has a diameter comparable to the diameter of the first recess 38 of the first aperture 35. When the tail 42 of the fastener 16 is inserted through the first aperture 35, the head 40 achieves a precision fit inside the first recess 38 such that a top surface of the head lies flush with the first surface 26. The second aperture 36 is internally threaded, enabling secure insertion of the second fastener. As can be seen from figures 1 and 2 the first aperture 35 is not threaded. However, a threaded aperture would also be appropriate for engaging the fastener.

Extending through the tail 42 is a tool engaging portion in the form of a hexagonal shaped recess 44. This recess 44 is shaped such that an Allen key (not shown) can be inserted therein and used to tighten the fastener from the tail 42. Although the tool engaging portion in the tail 44 of the first fastener 16 is in the form of an Allen Key receiver other tool engaging mechanisms can be used and other screws or bolts could also be used.

The spacer 18 is cylindrical in shape and includes a curved surface 46, a third surface (not shown) and a fourth surface 48. Extending through the third surface and the fourth surface 48 is a third aperture 50. Located on the third surface is a threaded protrusion (not shown). This threaded protrusion extends into the second aperture 36 adjacent the second end 24 of the device 10. The threads of the protrusion align with the threads within the second aperture 36 such that the spacer 18 can be added or removed, depending on the installation location for the enclosure 12. Extending through this threaded protrusion is the third aperture 50 such that the third aperture and the second aperture 36 align when in engagement. Located on the fourth surface 48 is a ring-shaped seal 54. The seal 54 helps prevents water or debris from entering the third aperture 50. Extending through the second aperture 36 of the support member 14 and the third aperture 50 is the second fastener in the form of a screw. The second fastener 18 secures the device 10 and the enclosure 12 to the wall.

Installation of the device 10 and the enclosure 12 will now be described.

The first aperture 35 of the device 10 is aligned with the pre-installed holes of the enclosure 12 (usually located at the rear, an example is indicated in figure 3 and labelled 56). The first surface portion 30 of the second surface 28 engages with the rear of the enclosure such that the junction 34, between the first surface portion and the second surface portion 32, abuts against the edge of the enclosure. The tail 42 of the first fastener 16 is then inserted into the first aperture 35. The fastener is then inserted into the hole 56 which has an internal thread (not shown) to engage the external thread of the fastener 16. An Allen key is inserted into the internal space of the enclosure 12, through which the tail 42 of the first fastener 16 will be protruding through the pre-drilled hole. The end of the Allen key is inserted into the hexagonal recess 44 of the fixing member 16 and tightened. As the fastener 16 is tightened the head 40 extends into the first recess 38 Of the first aperture until it lies flush with the first surface 26 of the device 10.

If the enclosure 12 is required to be installed at a distance from the wall, the spacer 14 is included in the installation. Next, the threaded protrusion is inserted into the second aperture 36 such that the third surface 48 of the spacer 16 engages the first surface 26 of the support member 14. The threaded protrusion engages with the threads located within the second aperture 36 and the spacer is tightened.

Depending on the number of pre-drilled holes in the enclosure 12, multiple support members 14 can be installed. The enclosure 12 is lifted into place such that the seal 54 of the spacer 18 engages the wall. Next, the second fastener is inserted through the second surface portion 32 of the second surface. The second fastener extends through both the second and third apertures, 35 and 50 eventually engaging with the wall. Finally, the second fastener is tightened until secure engagement between the device 10, the enclosure 12 and the wall is established.

If the enclosure 12 does not need to be installed away from the wall the spacer 18 is not used. In this case the second fastener is inserted through the enclosure and into the second aperture 36 of the support member 14 then directly into the wall.

By the inclusion of a device 10 for each fixing hole in the enclosure 12, installation of the enclosure onto a wall surface can take place in four different modes. Firstly, the spacers can be used on their own to raise the enclosure away from the wall. In this instance the thread of spacer 18 matches the internal thread of the hole 56 in the enclosure. Thus, it can be noted that the internal threads of the second aperture 36 and internal threads of the hole 56 are matched. Secondly, the support members 14 can be used on their own so as to extend the separation of the fixing locations for the enclosure but without raising the enclosure away from the wall. In a third mode, the support members 14 and spacers 18 are used allowing the enclosure to be installed away from the wall surface with the extended separation of the fixing locations. Finally, the device 10 can be not used with installation occurring straight through the holes in the enclosure and with the enclosure engaging the wall.

The preceding examples are a non-exhaustive list of suitable techniques and others are available which may be selected at the discretion of the person skilled in the art.

It will be appreciated by persons skilled in the art that the above embodiments have been described by way of example only and not in any limitative sense, and that various alterations and modifications are possible without departure from the scope of the protection which is defined by the appended claims. In particular, where various embodiments and aspects of the invention have been described above, features and steps of the apparatus and method are interchangeable between the embodiments and aspects of the invention. For example, where dimensions are indicated in the examples set out above these are examples of ideal measurements but should not be taken as being indicative of being essential to the performance of the invention.

## Claims

1. A device for fixing an enclosure to a wall, the device comprising:
a support member having a first aperture located adjacent a first end and a second aperture located adjacent a second end;
a first fastener for fixing said first end to the enclosure through said first aperture, wherein when said support member is fixed to the enclosure said second end extends beyond an edge of the enclosure;
a spacer having a third aperture therethrough and removably attached to said second end of said support member such that said second aperture and said third aperture align; and
a second fastener for fixing said second end to the wall such that said second fastener extends through said second aperture.

2. A device according to claim 1 wherein said spacer further comprises a threaded protrusion for engaging said second end of said support member.

3. A device according to any preceding claim wherein said support member further comprises a junction between said first and second apertures wherein said junction engages an edge of the enclosure to prevent rotation of the device once installed.

4. A device according to any preceding claim wherein said spacer further comprises a seal encircling said third aperture.

5. A device according to any preceding claim wherein said first fastener comprises a head and a tail wherein said head has a diameter greater than said tail and said tail is threaded and said first aperture comprises a first recess for engaging of said head of said first fastener.

6. A device according to claim 5 wherein said first fastener comprises a tool engaging portion in said tail.

7. A device according to any preceding claim wherein said tool engaging portion comprises an Allen key recess.

8. A device according to any preceding claim wherein said second fastener comprises a screw.

9. An enclosure comprising:
a bodying having an opening;
a lid for covering said opening of said body; and
a plurality of devices according to any preceding claim
